# EUROPÄISCHE PATENTSCHRIFT

(11) **EP 2 694 236 B1**
(45) Veröffentlichungstag und Bekanntmachung des Hinweises auf die Patenterteilung: **27.01.2021**
(21) Anmeldenummer: 12714624.9
(22) Anmeldetag: 30.03.2012
(51) Int. Cl.: B23B 27/04, B23B 27/08

(54) **WENDESCHNEIDPLATTE UND WENDESCHNEIDPLATTENHALTER**
INDEXABLE CUTTING INSERT AND INDEXABLE INSERT HOLDER
PLAQUETTE DE COUPE INDEXABLE ET SUPPORT POUR PLAQUETTE DE COUPE INDEXABLE

(30) Priorität: 08.04.2011 DE 102011007076
(43) Veröffentlichungstag der Anmeldung: 12.02.2014
(73) Patentinhaber: Walter AG, 72072 Tübingen (DE)
(72) Erfinder: ZEEB, Rudi, 72070 Tübingen (DE); BANDURA, Christian, 76185 Karlsruhe (DE)
(74) Vertreter: WSL Patentanwälte Partnerschaft mbB
(86) Internationale Anmeldenummer: PCT/EP2012/055884
(87) Internationale Veröffentlichungsnummer: WO 2012/136600

(56) Entgegenhaltungen:
- WO-A1-2012/052984
- DE-A1- 2 130 814
- GB-A- 2 070 472
- US-A1- 2009 162 154

## Beschreibung

Die vorliegende Erfindung betrifft eine Kombination aus einem Wendeschneidplattenalter und einer in einem Plattensitz des Wendeschneidplattenhalters montierten Wendeschneidplatte zum Ein- oder Abstechen gemäß dem Oberbegriff des unabhängigen Anspruchs 1. Die Wendeschneidplatte besteht aus einem plattenförmigen Grundkörper mit zwei parallelen Hauptflächen und einer die beiden Hauptflächen verbindenden und aus mehreren zueinander abgewinkelten Abschnitten bestehenden Umfangsfläche, wobei vier quer zu den Hauptflächen verlaufende Schneidkanten an der Umfangsfläche an dem Übergang zueinander abgewinkelter Abschnitte der Umfangsfläche vorgesehen sind und wobei in der Draufsicht auf die Hauptflächen die Lage der Schneidkanten ein Viereck definiert, wobei dieses Viereck weiterhin je zwei kurze und zwei lange Seiten aufweist und die Schneidkanten an benachbarten Ecken des Vierecks jeweils in Umfangsrichtung entgegengesetzt ausgerichtet und an diagonal gegenüberliegenden Ecken jeweils gleichsinnig ausgerichtet sind und wobei die entlang der kurzen Seiten verlaufenden Abschnitte der Umfangsfläche eine Positionierkerbe aufweisen, welche dafür vorgesehen ist, dass ein Positionierstift mit einer Zylinderoberfläche in die Positionierkerbe eingreift.

Eine entsprechende Wendeschneidplatte gemäß dem Oberbegriff des Anspruchs 1 ist aus der GB 2 070 472 bekannt.

Schneideinsätze zum Ein- oder Abstechen, welche eine Positionierkerbe entlang einer Umfangsfläche aufweisen, sind auch bekannt aus der US 2009/0162154 A1 sowie aus der WO 2012/052984 A1. Die bekannten Schneideinsätze sind so ausgelegt, dass ein in die Kerbe eingreifendes Positionierelement den Schneideinsatz in der Positionierkerbe einseitig mit einem Klemmdruck beaufschlagt.

Ein zugehöriger Wendeschneidplattenhalter für eine Wendeschneidplatte der vorgenannten Art, hat einen Plattensitz und eine Seitenfläche und eine an die Seitenfläche angrenzende Aussparung mit im Wesentlichen senkrecht zu der Seitenfläche und abgewinkelt zueinander verlaufenden Flanken.

In der Aussparung ist gegebenenfalls ein Teil bzw. eine Ecke einer viereckigen Wendeschneidplatte der vorgenannten Art aufzunehmen, von welcher bei bestimmungsgemäßem Gebrauch mindestens eine der Schneidkanten jeweils inaktiv ist und durch entsprechendes Indexieren bzw. Drehen oder Wenden des Schneideinsatze an einem entsprechenden Halter in eine aktive Position gebracht werden kann, wobei eine zuvor aktive Schneidkante in eine inaktive Position gelangt.

Ein Problem bei derartigen Schneideinsätzen besteht u.a. darin, dass ein relativ schmaler Teil der Wendeschneidplatte, welcher eine Schneidkante trägt, in der an einem Schneidplattenhalter montierten aktiven Position von diesem hervorsteht, um in eine Werkstückoberfläche eindringen und eine Nut in der Breite der Schneidkante einstechen zu können. Die Schneidkante ist dabei der am weitesten von dem Wendeschneidplattenhalter hervorstehende Teil. Dies führt bei herkömmlichen Wendeschneidplatten notwendigerweise dazu, dass Anlageflächen und Stützflächen, über welche die Wendeschneidplatte an einem Wendeschneidplattenhalter fixiert werden soll, so positioniert sind, dass über die jeweils aktive Schneidkante relativ ungünstige Hebelverhältnisse auf den Schneideinsatz wirken, welche die Tendenz haben, den Schneideinsatz aus seinem Sitz herauszuhebeln oder zumindest eine kleine Positionsveränderung des Schneideinsatzes verursachen können, so das auch die Schneidkantenposition nicht hinreichend exakt definiert werden kann.

Gegenüber diesem Stand der Technik liegt der vorliegenden Erfindung die Aufgabe zugrunde, eine Kombination aus einer Wendeschneidplatte und einem zugehörigen Wendeschneidplattenhalter bereitzustellen, bei welchen eine Fixierung mit günstigeren Hebelverhältnissen möglich ist und welche darüber hinaus eine dauerhaft präzisere Positionierung der Schneidkanten ermöglichen.

Diese Aufgabe wird durch eine Kombination aus einem Wendschneidplattenhalter und einer Wendeschneidplatte zum Ein- oder Abstechen gemäß dem unabhängigen Anspruch 1 gelöst.Bezüglich der Grundform des Schneideinsatzes sei zur Erläuterung darauf hingewiesen, dass der Begriff "kurze" bzw. "lange" Seiten sich nur auf das Verhältnis der das Viereck definierenden Seiten bezieht, d.h. zwei der Seiten des Vierecks sind jedenfalls kürzer als die beiden anderen Seiten, wobei die kurzen Seiten nicht gleich lang sein müssen und auch die beiden langen Seiten nicht zwingendermaßen gleichlang sein müssen, auch wenn dies letztlich bevorzugt ist. Bevorzugte Verhältnisse von langen zu kurzen Seiten werden später noch genauer definiert.

Unter "in Umfangsrichtung entgegengesetzt ausgerichteten" bzw. gleichsinnig ausgerichteten" Schneidkanten ist dabei die Ausrichtung von Span- und Freiflächen an einer Schneidkante relativ zur Umfangsrichtung gemeint. Gleichsinnig ausgerichtete Schneidkanten haben demzufolge Spanflächen, die in die gleiche Umfangsrichtung weisen (entgegen oder mit dem Uhrzeigersinn), während entgegengesetzt ausgerichtete Schneidkanten dementsprechend Spanflächen haben, die in Umfangsrichtung in jeweils entgegengesetzte Richtungen weisen.

Analoges gilt selbstverständlich für die jeweiligen Freiflächen. Die tatsächlichen Umfangsflächen des Schneideinsatzes müssen selbstverständlich nicht exakt ein Viereck definieren, sondern die einzelnen Umfangsabschnitte können durchaus relativ zueinander abgewinkelt verlaufen, was einen gekrümmten Verlauf einschließt, und lediglich die Schneidkanten am Übergang zwischen zwei Abschnitten der Umfangsfläche konkret zwischen je einem Abschnitt einer langen und einer kurzen Umfangsseite gebildet werden, spannen in einer seitlichen Draufsicht insgesamt das Viereck auf, wobei aber sowohl entlang der langen als auch der kurzen Seite der tatsächliche Umfangsflächenverlauf sich keineswegs geradlinig zwischen benachbarten Schneidkanten erstrecken muss.

Diese Ausgestaltung ermöglicht es, eine jeweils aktive Schneidkante, die in der Draufsicht durch eine Ecke zwischen einem Umfangsabschnitt je einer langen und einer kurzen Seite gebildet wird, mit einer Anlagefläche auf der anderen, gegenüberliegenden langen Seite abzustützen und gleichzeitig auch mit einem Stützelement an der der betreffenden aktiven Schneidkante gegenüberliegenden kurzen Seite abzustützen, die aufgrund der ungleich langen Ausbildung der Abstände zwischen den Schneidkanten eine entsprechend größere Entfernung von der aktiven Schneidecke und von der (dann aktiven) Anlagefläche der langen Seite hat, was zu den angesprochenen günstigeren Hebelverhältnissen führt. Dieses Verhältnis kann man insbesondere dadurch noch jeweils günstiger gestalten bzw. optimieren, dass man das Verhältnis von langen zu kurzen Seiten vergrößert.

Diese günstigeren Hebelverhältnisse führen wiederum zu einer genaueren, dauerhaften Positionierung der jeweils aktiven Schneidecke.

In der bevorzugten Ausführungsform der Erfindung ist dabei vorgesehen, dass die an die Schneidkanten anschließenden Spanflächen benachbarter Schneidkanten von der kurzen Seite bzw. von den kurzen Seiten des Vierecks jeweils abgewandt sind. Dementsprechend sind die Spanflächen benachbarter Schneidkanten jeweils einer langen Seite des Vierecks zugewandt und damit entgegengesetzt ausgerichtet.

Die Schneidkanten verlaufen in der bevorzugten Ausführungsform der Erfindung senkrecht zu den seitlichen Hauptflächen, wobei dies aber nicht zwingend der Fall ist, da die Schneidkanten auch ohne Weiteres geneigt zu dieser Richtung oder bogenförmig oder abgewinkelt verlaufen können, sich im Ergebnis aber von der einen Seite des Schneideinsatzes, d.h. von der einen Hauptfläche, zu der anderen Seite bzw. Hauptfläche erstrecken.

In der bevorzugten Ausführungsform ist das von den Schneidkanten aufgespannte Viereck ein Parallelogramm mit jeweils zwei gleichlangen kurzen Seiten und zwei gleichlangen langen Seiten, insbesondere ein Rechteck.

Dabei beträgt in der bevorzugten Ausführungsform das Seitenverhältnis von langen zu kurzen Seiten des Vierecks mindestens 1,1 und höchstens 5. Bevorzugt ist ein Seitenverhältnis von langen zu kurzen Seiten von mindestens 1,2 und höchstens 2, vorzugsweise höchstens 1,5. In einer konkreten Ausführungsform liegt das Seitenverhältnis von langen zu kurzen Seiten bei etwa 1,25 bis 1,3.

Verglichen mit einem herkömmlichen, in der Draufsicht ein Quadrat oder ein anderes regelmäßiges Vieleck aufspannenden Schneideinsatz, wie er für denselben Anwendungsfall verwendet werden würde, würde man dabei zwei gegenüberliegende Seiten tendenziell eher verlängern und nicht etwa die beiden anderen Seiten verkürzen, weil nur die entsprechende Verlängerung zweier gegenüberliegender Seiten auch zu günstigeren Hebelverhältnissen als bei einem entsprechenden herkömmlichen Schneideinsatz führt.

Weiterhin ist in einer Ausführungsform der Erfindung vorgesehen, dass die unmittelbar an eine Schneidkante angrenzenden, einander gegenüberliegenden Abschnitte der Hauptflächen Nebenfreiflächen bilden, deren Abstand zueinander, ausgehend von der Schneidkante und dem Abstand zu dieser Schneidkante kleiner ist als die senkrecht zu den Hauptflächen gemessene Länge der Schneidkante. Dies sorgt beim Ein- und Abstechen dafür, dass die betreffenden Nebenfreiflächen nicht mit den Wänden einer durch die Schneidkante erzeugten Nut in Kontakt kommen, sondern einen kleinen Abstand zu dieser haben.

Da die Wendeschneidplatte in erster Linie zum Ein- und Abstechen gedacht ist, an einem rotierenden Werkstück also in die Umfangsfläche Nuten eingeschnitten oder ein Abschnitt des Werkstücks abgeschnitten wird (indem die Nut bis zum Zentrum des Werkstücks eingestochen wird), ist die entsprechende Wendeschneidplatte im Allgemeinen relativ dünn, d.h. auch die kurzen Seiten des von den Schneidkanten aufgespannten Vierecks sind immer noch relativ lang gegenüber der Dicke des Schneideinsatzes. In der bevorzugten Ausführungsform beträgt das Verhältnis der kurzen Seiten des Vierecks zur Dicke der Wendeschneidplatte mindestens 2 und höchstens 15, vorzugsweise mindestens drei und höchstens 10. In einem konkreten Ausführungsbeispiel liegt das Verhältnis der kurzen Seiten zur (maximalen) Dicke der Wendeschneidplatte bei etwa 6 bis 7.

Zwar kommt es letztlich nur auf die die Dicke der an die Schneidkante anschließenden Abschnitte der Wendeschneidplatte an, die gegebenenfalls in die von der Schneidkante erzeugte Nut eines Werkstückes eindringen müssen und demzufolge eine entsprechende geringe Dicke haben müssen, jedoch wird auch der übrige Teil der Wendeschneidplatte, der in einer entsprechende Aussparung eines Wendeschneidplattenhalters aufgenommen wird, im Allgemeinen schon aus Gründen der Materialersparnis nicht übermäßig dick ausgeführt werden und ist demzufolge oft nur geringfügig dicker als die Schneidkante in dieser Richtung gemessen lang ist. Die Wendeschneidplatte kann selbstverständlich auch insgesamt eine maximale Dicke aufweisen die geringer ist als die die Schneidkante in Richtung dieser Dicke gemessen lang ist.

Die Positionierkerbe bildet zusammen mit der aktiven Schneidkante und einer Anlagefläche an der langen Seite einen günstigen Hebel und definiert die Position der die Wendeschneidplatte festlegenden Anschlagpunkte.

In einer weiteren Ausführungsform der vorliegenden Erfindung sind an den entlang der langen Seiten des Vierecks verlaufenden Abschnitten der Umfangsfläche zwei im Abstand von der jeweils nächstliegenden Schneidkante und auch im Abstand zueinander angeordnete Anlageflächen vorgesehen. Die beiden Anlageflächen befinden sich demzufolge jeweils irgendwo in dem Bereich zwischen einer Schneidkante und der Mitte der langen Seite.

In einer weiteren Ausführungsform ist vorgesehen, dass die Hauptflächen eine zentrale, durchgehende Fixierbohrung aufweisen. Dies ermöglicht das zusätzliche Befestigen des Schneideinsatzes mit Hilfe einer entsprechenden Schraube, die durch die Fixierbohrung hindurchgeführt und in ein entsprechendes Gewinde in die Befestigungsbohrung eines Wendeschneidplattenhalters eingeschraubt wird. Dies trägt zusätzlich zur genaueren Positionierung und Fixierung der Wendeschneidplatte und deren aktiver Schneidkante bei.

Schließlich ist gemäß einer Ausführungsform der Erfindung vorgesehen, dass die Wendeschneidplatte aus einem zentralen Hauptteil mit einer ersten Plattendicke und der zentralen Fixierbohrung, sowie aus vier Eckabschnitten geringerer Dicke besteht, an welchen die Schneidkanten mit Freiflächen und Spanflächen sowie den Nebenfreiflächen angeordnet sind.

Der Wendeschneidplattenhalter der Kombination weist in einer Ausführungsform einen Plattensitz, eine Seitenfläche und eine an die Seitenfläche angrenzende Aussparung mit im Wesentlichen senkrecht zu der Seitenfläche und abgewinkelt zueinander verlaufenden Flanken auf, wobei an einer der Flanken eine Anschlagfläche vorgesehen ist, die von der durch den Schnittpunkt der abgewinkelten Flanken definierten Ecke beabstandet ist, während an der zweiten Flanke ebenfalls im Abstand von der Ecke ein Stützelement in Form eines zylindrischen Positionierstiftes mit konvexem, runden Querschnitt vorgesehen ist.

Die abgewinkelten Flanken müssen wiederum nicht geradlinig verlaufen und der Schnittpunkt zwischen diesen Flanken kann auch ein gedachter Schnittpunkt durch eine gedachte Verlängerung eines gemittelten Verlaufs dieser Flanken sein. Der Sinn des vorstehend beschriebenen Merkmals besteht darin, dass die Anschlagfläche möglichst nahe an dem freien Rand der Aussparung unterhalb einer aktiven Schneidkante und entfernt von dem Stützelement liegen soll, ohne jedoch mit einer (nicht aktiven) Schneidkante oder Spanfläche in Berührung zu kommen. Die vorstehend definierte Ecke hat von diesem freien Rand der Aussparung einen großen Abstand und demzufolge hat auch die Anschlagfläche einen großen Abstand von dieser Ecke, ohne dass es dabei auf die genauen Maße und die exakte Lage der Ecke oder der Anschlagfläche ankommt.

Ein solcher Wendeschneidplattenhalter ermöglicht es, dass eine Wendeschneidplatte der vorstehend beschriebenen Art mit einer ihrer Hauptflächen auf die Seitenfläche der Aussparung aufgelegt wird, während eine der jeweils aktiven Schneidkante diagonal gegenüberliegende Schneidkante bzw. Schneidecke zwischen den Flanken des Aufnahmeraums in diesen hineinragt. Bevorzugterweise haben sowohl die langen als auch die kurzen Seiten der Wendeschneidplatten einen, abgesehen von kleineren Variationen, insgesamt konkaven Verlauf, d.h. sie sind gegenüber einer direkten geradlinigen Verbindung der Schneidkanten zumindest in der Mitte etwas zurückgezogen und definieren damit in Ihren Eckbereichen annähernd dreieckige Körper, die in den entsprechenden, von zwei V-förmig verlaufenden Flanken begrenzten Aufnahmeraum hineinragen. Der Aufnahmeraum und die Seitenfläche des Wendeschneidplattenhalters können dabei so ausgestaltet sein, dass auch der gesamte Hauptteil und ein Teil zweier weiterer Schneidecken in dem Aufnahmeraum aufgenommen sind, wobei aber eine Schneidecke auf jeden Fall über die Seitenfläche hinaus und aus dem Aufnahmeraum heraus ragt. Dies ist die jeweils aktive Schneidkante bzw. Schneidecke. Mit "Schneidecke" ist in diesem Fall der in der seitlichen Draufsicht an den vier Ecken des oben definierten Vierecks erkennbare, die Schneidkante umfassende Eckbereich gemeint, der im montierten Zustand (und in der Seitenansicht) mit einer aktiven Schneidkante über die Kontur des Wendeschneidplattenhalters hinausragt.

Um diese aktive Schneidecke durch eine andere, zuvor nicht aktive Schneidecke zu ersetzen, kann entweder der Schneideinsatz um eine zentrale, sich senkrecht durch die Hauptflächen erstreckende Achse um 180° gedreht werden oder aber er kann um jeweils eine sich zentral parallel zur langen Seite oder parallel zur kurzen Seite erstreckende Achse um jeweils 180° gewendet oder gespiegelt werden, wobei auch Kombinationen dieser Wendevorgänge zulässig sind. Auf diese Weise können auf jeden Fall alle vier Schneidkanten nacheinander in eine aktive Position gebracht werden.

Das Stützelement des Wendeschneidplattenhalters ist ein Stift mit einer Zylinderoberfläche, wobei sich die Achse des Zylinders senkrecht zur Seitenfläche erstreckt. Ein solcher Zylinder kann so positioniert und bemessen sein, dass er in die Positionierkerbe der kurzen Seite der Wendeschneidplatte eingreift und diese damit, jedenfalls in Verbindung mit einer weiteren Anlagefläche, eindeutig positioniert.

Weiterhin hat in einer Ausführungsform der Erfindung der Wendeschneidplattenhalter eine die Seitenfläche durchstoßende Befestigungsbohrung, wobei der Abstand des am weitesten von dem Stützelement entfernten Punkt der Anschlagfläche zu dem nächstliegenden Punkt des Stützelementes größer ist als der Abstand derselben Punkte jeweils zum Zentrum der Befestigungsbohrung. Das Stützelement, die Achse der Befestigungsbohrung und die Anschlagsfläche spannen damit ein Dreieck auf, dessen längste Seite sich zwischen dem Stützelement und der Anschlagfläche erstreckt. Auch bei der Befestigungsbohrung müssen die Flanken des Aufnahmeraums nicht zwingend geradlinig verlaufen, sondern können aus mehreren, zueinander abgewinkelten Flankenabschnitten bestehen, von denen jedoch einer die erwähnte Anschlagfläche bildet, während an der anderen Flanke zwei Abschnitte eine vorspringende Ecke bilden, an welcher das Stützelement angeordnet ist.
Die Erfindung betrifft schließlich in einer Ausführungsform auch eine Kombination aus einer Wendeschneidplatte sowie einem Wendeschneidplattenhalter wobei der Abstand des Zentrums der Befestigungsbohrung in der Seitenfläche des Wendeschneidplattenhalters zu der Anschlagfläche und dem Positionierstift kleiner ist als der Abstand des Zentrums der Fixierbohrung zu der Anlagefläche und der Positionierkerbe der Wendeschneidplatte. Dies führt effektiv dazu, dass beim Hindurchführen einer entsprechenden Befestigungsschraube durch die Fixierbohrung des Wendeschneidplattenhalters und in die ggf. mit einem Gewinde versehene Befestigungsbohrung in der Seitenfläche des Wendeschneidplattenhalters eine Seitenflanke der betreffenden Befestigungsschraube eine Kraft auf die Wand der Fixierbohrung aufweist, die in Richtung der Ecke des V-förmig begrenzten Aufnahmeraums, d.h. in die Richtung zwischen Positionierstift und Anschlagfläche gerichtet ist. Dadurch wird die Wendeschneidplatte mit ihrer Positionierkerbe fest gegen den Positionierstuft an der einen Flanke und mit ihrer Anlagefläche fest gegen die Anschlagfläche der anderen Flanke des Aufnahmeraums gedrückt und so eindeutig fixiert und positioniert.

Der entscheidende Vorteil der erfindungsgemäßen Kombination aus Wendeschneidplatte und Wendeschneidplattenhalter liegt darin, dass bei einer gegebenen Einstichtiefe, welche durch die Länge bzw. den Überstand der Eckbereiche der Wendeschneidplatte definiert wird, deren Dicke geringer ist als die senkrecht zu den Hauptflächen gemessene Länge der Schneidkante, eine Abstützung der aktiven Schneidecke bzw. Schneidkante mit relativ günstigen Hebelverhältnissen möglich ist, wodurch auch die Position der Schneidkante dauerhaft exakt definiert bleibt.

Weitere Vorteile, Merkmale und Anwendungsmöglichkeiten der vorliegenden Erfindung werden deutlich anhand der folgenden Beschreibung einer bevorzugten Ausführungsform und der dazugehörigen Figuren. Es zeigen:
- Figur 1: eine Wendeschneidplatte in der Draufsicht auf eine der Hauptflächen und in einer stirnseitigen Ansicht,
- Figur 2: ein Wendeschneidplattenhalter ohne eine darin aufgenommene Wendeschneidplatte, und
- Figur 3:: eine Wendeschneidplatte nach Figur 1 in der Draufsicht auf eine der Hauptfläche und in einer stirnseitigen Ansicht, jeweils montiert an einem Wendeschneidplattenhalter nach Figur 2,

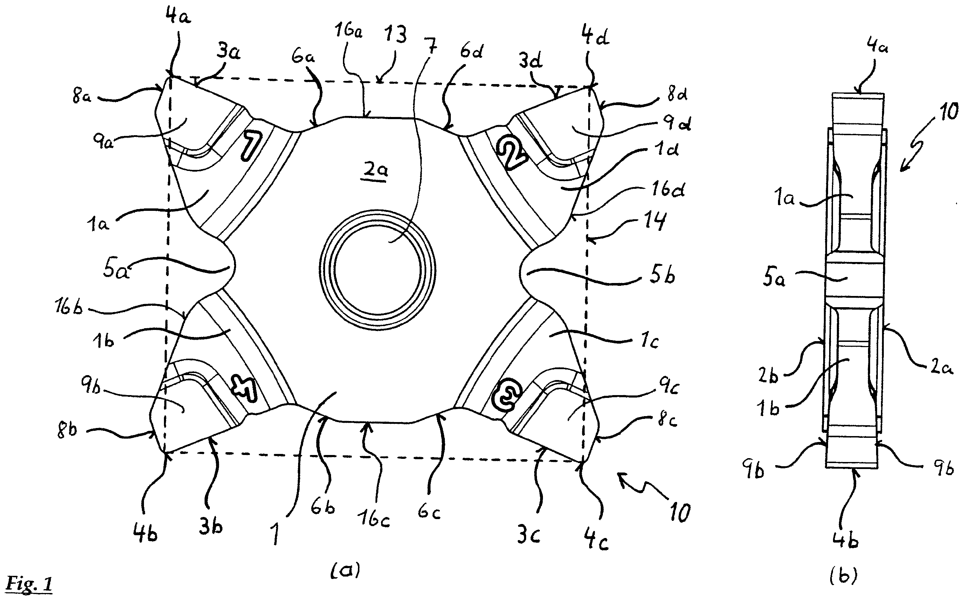

Die Wendeschneidplatte weist vier sich in Figur 1(a) senkrecht zur Papier-Ebene erstreckende Schneidkanten 4a, 4b, 4c und 4d auf. Diese vier Schneidkanten definieren die Ecken eines gedachten Vierecks, konkret eines Rechtecks, welches mit gestrichelten Linien eingezeichnet ist und aus langen Seiten 13 und kurzen Seiten 14 besteht. Die tatsächlichen Umfangsflächen 16a, 16b, 16c und 16d, die sich jeweils zwischen den Schneidkanten 4a, 4b, 4c und 4d erstrecken, haben einen von den geradlinigen Seiten 13 und 14 abweichenden Verlauf in Form mehrerer zueinander abgewinkelter Abschnitte, die an den kurzen Seiten 14 teils über die Seiten 14 konvex hervorspringen, im Zentrum jedoch konkav zurück springen und dort eine Positionierkerbe 5a, 5b aufweisen. Auch die Umfangsflächen 16a und 16c, die entlang der langen Seiten 13 verlaufen, springen gegenüber den langen Seiten 13 im Ergebnis zurück, wodurch in der Draufsicht im Wesentlichen dreieckförmige Schneidspitzen 1a, 1b, 1c und 1d gebildet werden, die von dem Hauptteil 1 des Grundkörpers in Richtung der Ecken des gedachten Vierecks hervorstehen.

Dabei hat der in der Draufsicht achteckige Hauptteil 1, der parallel gegenüberliegende ebene Oberflächen aufweist, eine etwas größere Dicke als vier an gegenüber liegenden Seiten des Hauptteiles 1 ansetzende Schneidspitzen 1a, 1b, 1c und 1d, deren Dicke etwas geringer ist als die senkrechte zu den Hauptflächen 2a, 2b gemessene Länge der Schneidkanten 4a, 4b, 4c und 4d. Allerdings kann die Dicke des Hauptteils 1 ebenfalls geringer sein als die in dieser Dickenrichtung gemessene Länge der Schneidkanten 4 und auch gleich dick oder dünner als die Schneidspitzen 1a,b,c,d. Die Schneidspitzen weisen je eine Spanfläche 3 a,b,c,d, eine Freifläche 8 a,b,c,d, eine am Übergang dieser beiden Flächen gebildete Schneidkante 4 a,b,c,d, sowie Nebenfreiflächen 9 a,b,c,d auf.

Der lichte Abstand der jeweiligen Schneidkante 4 von dem Hauptteil 1 bestimmt somit die maximale Eintauchtiefe der Schneidspitzen 1 a,b,c,d in ein Werkstück, wobei auch der Wendeschneidplattenhalter so ausgelegt ist, dass im Wesentlichen nur die aktive Schneidspitze über die Seitenfläche 21 bzw. die Kontur des Wendeschneidplattenhalters 20 hinausragt.

Figur 1(b) zeigt eine Ansicht auf die Wendeschneidplatte 10 der Figur 1 (a) von links. Man erkennt auch hier die beiden Schneidkanten 4a und 4b, von denen im eingebauten Zustand jeweils nur eine Schneidkante aktiv ist. Die beiden übrigen Schneidkanten 4c und 4d sind vom Betrachter abgewandt, wobei die Schneidkante 4b von der Freifläche her am unteren Rand der Schneidplatte 10 in Figur 1 (a) noch erkennbar ist.

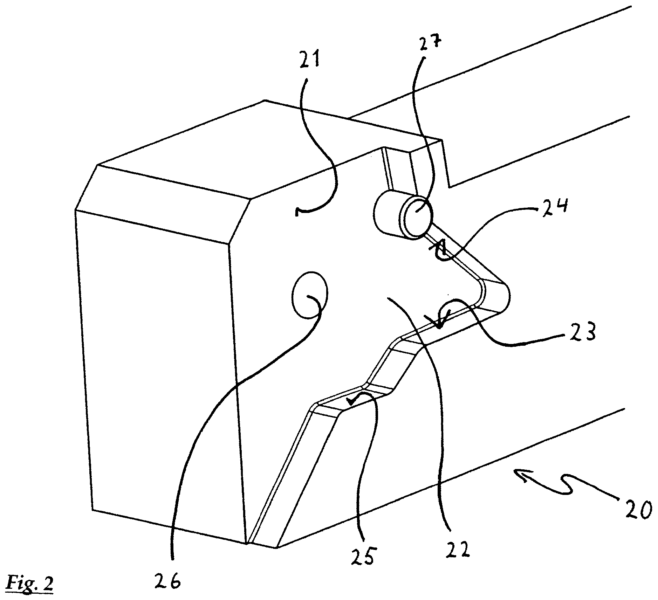

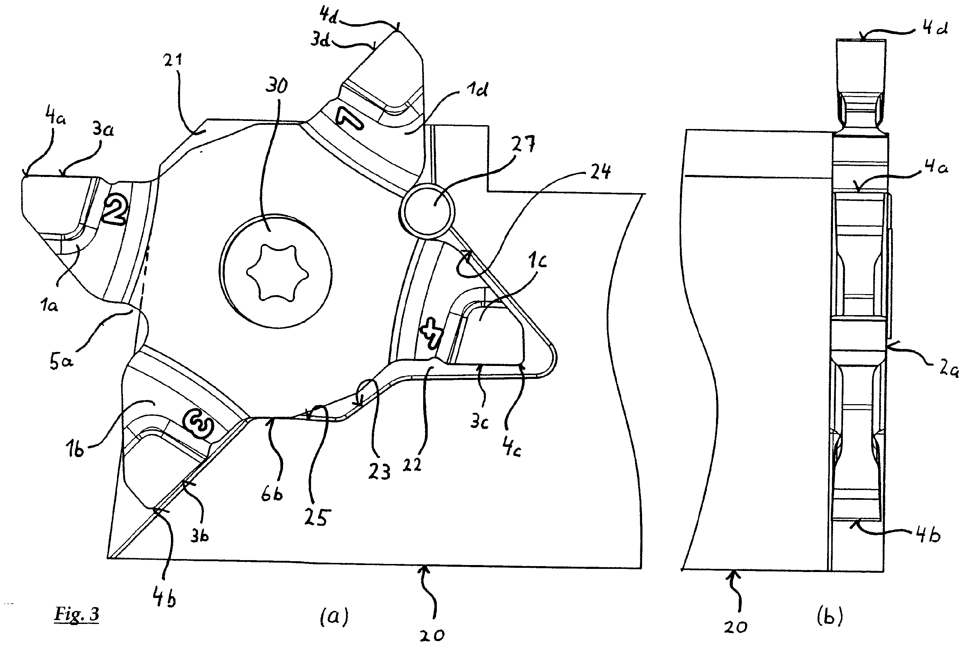

In Figur 2 ist der Wendeschneidplattenhalter 20 dargestellt. Wie man sieht, hat der Wendeschneidplattenhalter 20 gemäß Figur 2 einen Plattensitz, der durch eine Seitenfläche 21 und senkrecht zu der Seitenfläche 21 verlaufende Flanken 23, 24 definiert wird, die einen Aufnahmeraum 22 für einen annähernd V-förmigen oder dreieckigen Körper bilden. Die Flanken 23, 24 bestehen jeweils aus mehreren, abgewinkelt zueinander verlaufenden Abschnitten, definieren aber insgesamt im Wesentlichen eine V- oder Dreiecksform. An der oberen Flanke 24, die durch zwei abgewinkelte Abschnitte definiert wird, welche gemeinsam eine vorspringende Ecke aufweisen, ist im Bereich dieser Ecke ein zylindrischer Stift 27 vorgesehen, der ein Stützelement bildet und, wie man in Figur 3 (a) erkennt, im montierten Zustand einer Wendeschneidplatte in eine Positionierkerbe 5a bzw. 5b eingreift.

Die Flanke 23 weist im Abstand zu der Ecke, welche durch die generelle V-Form beider Flanken 23, 24 definiert wird, eine Anschlagsfläche 25, an welcher eine Wendeschneidplatte sich mit ihrer entsprechenden Anlagefläche 6a, 6b, 6c oder 6d abstützen kann.

Weiter erkannt man auch in der Seitenfläche 21 eine Befestigungsbohrung 26, die als Gewindebohrung ausgeführt ist. Der Plattensitz und die Wendeschneidplatte sind so bemessen, dass von einer montierten Wendeschneidplatte 10 im Wesentlichen der Hauptteil 1 und zwei oder drei benachbarte Schneidecken in dem sich neben der Seitenfläche 21 erstreckenden Aufnahmeraum 22 aufgenommen sind während auf jeden Fall die vierte, aktive Schneidecke aus dem Aufnahmeraum herausragt.

In Figur 3 ist die Wendeschneidplatte 10 an dem Wendeschneidplattenhalter 20 montiert dargestellt. Die Wendeschneidplatte 10 ist überwiegend in dem Aufnahmeraum 22 des Wendeschneidplattenhalters 20 aufgenommen, wobei die Schneidecke bzw. Schneidspitze 1a von dem Wendeschneidplattenhalter hervorsteht. Dabei wird der gesamte, über die gestrichelt angedeutete Kontur des Wendeschneidplattenhalters 20 bzw. der Seitenfläche 21 hinausragende und durch zwei parallele Knicklinien abgegrenzte Abschnitt der Wendeschneidplatte 10 als "Schneidecke" bzw. "Schneidspitze 1a" bezeichnet. Auch die Schneidspitze 1d ragt noch teilweise über den oberen Rand des Wendeschneidplattenhalters 20 hinaus, ist aber dennoch in Figur 3 (a) und (b) in einer inaktiven Position. Das Stützelement bzw. der Positionierstift 27 greift dabei in die Positionierkerbe 5b ein, die einen konkaven, gekrümmten Verlauf mit einem variierenden Radius hat, der im Zentrum der Positionierkerbe 5a,b etwas kleiner ist als der Radius des Stiftes 27 und außerhalb des Zentrums größer wird, so dass der Stift 27 im Wesentlichen entlang zweier linienförmiger Bereiche an der Fläche der Positionierkerbe anliegt. Gleichzeitig liegt die Anlagefläche 6b an der Anschlagfläche 25 der Flanke 23 an. Die Flanken 23, 24 sind dabei so angeordnet und bemessen, dass sie keinen Kontakt mit den in den Plattensitz aufgenommenen Schneidkanten 4b und 4c sowie den angrenzenden Span- und Freiflächen haben. Die Wendeschneidplatte 10 wird ausschließlich durch die zentrale Befestigungsschraube 30, die an der Anschlagfläche 25 anliegende Anlagefläche 6b und den in der Positionierkerbe 5b liegenden Stift 27 fixiert und eindeutig positioniert. Auch bei auf die Schneidkante 4a wirkenden Belastungen erhält man so eine sehr sichere und feste Fixierung und Positionierung der Schneidkante 4a.

## Patentansprüche

1. Kombination aus einem Wendeschneidplattenhalter (20) und einer Wendeschneidplatte (10) zum Ein- oder Abstechen, wobei der Wendeschneidplattenhalter (20) einen Plattensitz mit einem Stützelement in Form eines Positionierstiftes (27) mit einer zylindrischen Oberfläche aufweist, wobei die Wendeschneidplatte (10) in dem Plattensitz montiert ist, wobei die Wendeschneidplatte (10) aus einem plattenförmigen Grundkörper mit zwei parallelen Hauptflächen (2a, b) und einer die beiden Hauptflächen verbindenden und aus mehreren zueinander abgewinkelten Abschnitten bestehenden Umfangsfläche (16 a-d) besteht, wobei vier quer zu den Hauptflächen verlaufende Schneidkanten (4 a-d) an der Umfangsfläche (16 a-d) am Übergang zueinander abgewinkelter Abschnitte der Umfangsfläche vorgesehen sind und wobei in der Draufsicht auf die Hauptflächen die Lage der Schneidkanten ein Viereck definiert, wobei das Viereck je zwei kurze und zwei lange Seiten (13, 14) aufweist und die Schneidkanten (4 a-d) an benachbarten Ecken des Vierecks jeweils in Umfangsrichtung entgegengesetzt ausgerichtet und an diagonal gegenüber liegenden Ecken des Vierecks jeweils gleichsinnig ausgerichtet sind, wobei die entlang der kurzen Seiten verlaufenden Abschnitte der Umfangsfläche eine Positionierkerbe (5 a, b) aufweisen, welche den Positionierstift (27) aufnimmt, **dadurch gekennzeichnet, dass** die Positionierkerbe (5a,b) einen konkaven, gekrümmten Verlauf mit einem variierenden Radius hat, der im Zentrum der Positionierkerbe (5a,b) einen kleineren Wert hat als außerhalb des Zentrums, wo der Radius größer wird, sodass die zylindrische Oberfläche des Positionierstiftes (27), welche einen Radius zwischen dem kleineren Radius im Zentrum der Positionierkerbe und dem größeren Radius außerhalb des Zentrums derselben hat, im Wesentlichen entlang zweier linienförmiger Bereiche an der Fläche der Positionierkerbe anliegt.

2. Kombination nach Anspruch 1, **dadurch gekennzeichnet, dass** die an die Schneidkanten anschließenden Spanflächen (3 a-d) benachbarter Schneidkanten von der bzw. den kurzen Seite(n) des Vierecks abgewandt sind.

3. Kombination nach einem der vorstehenden Ansprüche, **dadurch gekennzeichnet, dass** die Schneidkanten (4 a,b,c,d) im Wesentlichen senkrecht zu den Hauptflächen (2a, 2b) verlaufen.

4. Kombination nach einem der vorstehenden Ansprüche, **dadurch gekennzeichnet, dass** die Schneidkanten mindestens abschnittsweise gekrümmt oder unter einem Winkel zu den Hauptflächen (2a, 2b) verlaufen.

5. Kombination nach einem der vorstehenden Ansprüche, **dadurch gekennzeichnet, dass** das Viereck ein Parallelogramm, vorzugsweise ein Rechteck ist, wobei das Seitenverhältnis von langen (13) zu kurzen Seiten (14) des Vierecks mindestens 1,1 und höchstens 5 beträgt.

6. Kombination nach einem der vorstehenden Ansprüche, **dadurch gekennzeichnet, dass** das Verhältnis der kurzen Seiten (14) des Vierecks zur Dicke (D) der Wendeschneidplatte mindestens 2 und höchstens 15 beträgt, vorzugsweise mindestens 3 und höchstens 10 beträgt.

7. Kombination nach einem der vorstehenden Ansprüche, **dadurch gekennzeichnet, dass** die entlang der langen Seiten verlaufenden Abschnitte der Umfangsfläche zwei im Abstand von der nächstliegenden Schneidkanten und im Abstand voneinander angeordnete Anlageflächen (6 a-d) aufweisen.

8. Kombination nach einem der vorstehenden Ansprüche, **dadurch gekennzeichnet, dass** die unmittelbar an eine Schneidkante (4 a-d) angrenzenden, einander gegenüber liegenden Abschnitte der Hauptflächen Nebenfreiflächen (9 a,b,c,d) bilden, deren Abstand zueinander, ausgehend von der Schneidkante und im Abstand zu dieser, kleiner ist als die senkrecht zu den Hauptflächen gemessene Länge der Schneidkante.

9. Kombination nach einem der vorstehenden Ansprüche, **dadurch gekennzeichnet, dass** die Hauptflächen eine zentrale, durchgehende Fixierbohrung (7) aufweisen.

10. Kombination nach einem der vorstehenden Ansprüche, **dadurch gekennzeichnet, dass** die Wendeschneidplatte (10) aus einem zentralen Hauptteil (1) mit einer ersten Plattendicke und der zentralen Fixierbohrung (7) sowie aus vier Schneidspitzen (1 a,b,c,d) mit Schneidkanten (4 a,b,c,d) besteht, wobei der Hauptteil (1) entweder eine geringere Dicke oder eine größere Dicke hat als die Schneidspitzen.

11. Kombination nach einem der Ansprüche 1 bis 10, ,**dadurch gekennzeichnet, dass** der Plattensitz eine Seitenfläche (21) und eine an die Seitenfläche angrenzende Aussparung mit im Wesentlichen senkrecht zu der Seitenfläche und abgewinkelt zueinander verlaufenden Flanken (23, 24) aufweist, wobei an einer der Flanken (23) eine Anschlagfläche (25) vorgesehen ist, die von der durch einen gedachten Schnittpunkt der abgewinkelten Flanken (23, 24) definierten Ecke beabstandet ist, während an der zweiten Flanke ebenfalls im Abstand von der Ecke der Positionierstift (27) vorgesehen ist, wobei der Abstand des Zentrums der Befestigungsbohrung (26) in der Seitenfläche (21) des Wendeschneidplattenhalters zu der Anschlagfläche (25) und dem Positionierstift (27) kleiner ist als der Abstand des Zentrums der Fixierbohrung zu der Anlagefläche (6 a,b,c,d) der Wendeschneidplatte und der Positionierkerbe (5 a,b).

## Claims

1. Combination of an indexable cutting insert holder (20) and an indexable cutting insert (10) for grooving or parting, wherein the indexable cutting insert holder (20) has an insert seat with a supporting element in the form of a positioning pin (27) with a cylindrical surface, wherein the indexable cutting insert (10) is mounted in the insert seat, wherein the indexable cutting insert (10) consists of a plate-shaped base body with two parallel main surfaces (2a, b) and a peripheral surface (16 a-d) joining the two main surfaces and consisting of several segments that are angled with respect to one another, wherein four cutting edges (4 a-d) extending obliquely to the main surfaces are provided on the peripheral surface (16 a-d) at the transition between segments of the peripheral surface that are angled with respect to one another and wherein in top view onto the main surfaces the position of the cutting edges defines a quadrilateral, wherein the quadrilateral has two short and two long sides (13, 14) and the cutting edges (4 a-d) are oriented in opposite directions on adjacent corners of the quadrilateral in each case in the peripheral direction and in each case are oriented in the same direction on diagonally opposite corners of the quadrilateral, wherein the segments of the peripheral surface extending along the short sides have a positioning notch (5 a, b), which receives the positioning pin (27), **characterized in that** the positioning notch (5a,b) has a concave, curved profile with a varying radius, which has a smaller value in the centre of the positioning notch (5a,b) than outside the centre, where the radius becomes larger, with the result that the cylindrical surface of the positioning pin (27), which has a radius between the smaller radius in the centre of the positioning notch and the larger radius outside the centre thereof, essentially abuts on the surface of the positioning notch along two linear areas.

2. Combination according to claim 1, **characterized in that** the cutting surfaces (3 a-d) of adjacent cutting edges, contiguous with the cutting edges, are turned away from the short side or sides of the quadrilateral.

3. Combination according to one of the preceding claims, **characterized in that** the cutting edges (4 a,b,c,d) extend essentially normal to the main surfaces (2a, 2b).

4. Combination according to one of the preceding claims, **characterized in that** the cutting edges extend in a curved manner at least in sections or at an angle to the main surfaces (2a, 2b).

5. Combination according to one of the preceding claims, **characterized in that** the quadrilateral is a parallelogram, preferably a rectangle, wherein the aspect ratio of long (13) to short (14) sides of the quadrilateral is at least 1.1 and at most 5.

6. Combination according to one of the preceding claims, **characterized in that** the ratio of the short sides (14) of the quadrilateral to the thickness (D) of the indexable cutting insert is at least 2 and at most 15, preferably is at least 3 and at most 10.

7. Combination according to one of the preceding claims, **characterized in that** the segments of the peripheral surface extending along the long sides have two locating surfaces (6 a-d) arranged at a distance from the nearest cutting edges and at a distance from one another.

8. Combination according to one of the preceding claims, **characterized in that** the segments of the main surfaces opposite one another, and immediately adjoining a cutting edge (4 a-d), form minor flanks (9 a,b,c,d), whose distance from one another, starting from the cutting edge and at a distance from it, is smaller than the length of the cutting edge measured normal to the main surfaces.

9. Combination according to one of the preceding claims, **characterized in that** the main surfaces have a central, locating through-hole (7).

10. Combination according to one of the preceding claims, **characterized in that** the indexable cutting insert (10) consists of a central main part (1) with a first insert thickness and the central locating hole (7) and of four cutting tips (1 a,b,c,d) with cutting edges (4 a,b,c,d), wherein the main part (1) has either a smaller thickness or a larger thickness than the cutting tips.

11. Combination according to one of claims 1 to 10, **characterized in that** the insert seat has a lateral surface (21) and a recess adjoining the lateral surface with flanks (23, 24) extending essentially normal to the lateral surface and angled relative to one another, wherein on one of the flanks (23) a stop surface (25) is provided, which is spaced from the corner defined by an imaginary point of intersection of the angled flanks (23, 24), whereas the positioning pin (27) is provided on the second flank, also at a distance from the corner, wherein the distance from the centre of the fixing hole (26) in the lateral surface (21) of the indexable cutting insert holder to the stop surface (25) and the positioning pin (27) is smaller than the distance from the centre of the locating hole to the locating surface (6 a,b,c,d) of the indexable cutting insert and the positioning notch (5 a,b).

## Revendications

1. Combinaison d'un support de plaquette de coupe amovible (20) et d'une plaquette de coupe amovible (10) pour le rainurage ou le décolletage, dans laquelle le support de plaquette de coupe amovible (20) présente un siège de plaquette avec un élément d'appui sous la forme d'une tige de positionnement (27) avec une surface cylindrique, dans laquelle la plaquette de coupe amovible (10) est montée dans le siège de plaquette, dans laquelle la plaquette de coupe amovible (10) se compose d'un corps de base en forme de plaquette avec deux surfaces principales (2a, b) parallèles et une surface périphérique (16 a-d) reliant les deux surfaces principales et se composant de plusieurs sections coudées les unes par rapport aux autres, dans laquelle quatre arêtes de coupe (4 a-d) s'étendant transversalement aux surfaces principales sont prévues sur la surface périphérique (16 a-d) au niveau de la transition de sections coudées les unes par rapport aux autres de la surface périphérique et dans laquelle dans la vue en élévation sur les surfaces principales la position des arêtes de coupe définit un quadrilatère, dans laquelle le quadrilatère présente deux côtés courts et deux côtés longs (13, 14) et les arêtes de coupe (4 a-d) sont orientées au niveau de coins contigus du quadrilatère respectivement à l'opposé dans le sens périphérique et sont orientées au niveau de coins se trouvant à l'opposé en diagonale du quadrilatère respectivement dans le même sens, dans laquelle les sections s'étendant le long des côtés courts de la surface périphérique présentent une encoche de positionnement (5 a, b) qui reçoit la tige de positionnement (27), **caractérisée en ce que** l'encoche de positionnement (5a, b) présente une étendue courbée concave avec un rayon variable qui possède au centre de l'encoche de positionnement (5a, b) une valeur plus petite qu'en dehors du centre, où le rayon est plus grand de sorte que la surface cylindrique de la tige de positionnement (27) qui possède un rayon entre le rayon plus petit au centre de l'encoche de positionnement et le rayon plus grand en dehors du centre de celle-ci, repose sensiblement le long de deux zones linéaires contre la surface de l'encoche de positionnement.

2. Combinaison selon la revendication 1, **caractérisée en ce que** les surfaces de dépouille (3 a-d) se raccordant aux arêtes de coupe d'arêtes de coupe contiguës sont éloignées du ou des côtés courts du quadrilatère.

3. Combinaison selon l'une des revendications précédentes, **caractérisée en ce que** les arêtes de coupe (4 a, b, c, d) s'étendent sensiblement perpendiculairement aux surfaces principales (2a, 2b).

4. Combinaison selon l'une des revendications précédentes, **caractérisée en ce que** les arêtes de coupe s'étendent au moins par sections courbées ou sous un angle par rapport aux surfaces principales (2a, 2b).

5. Combinaison selon l'une des revendications précédentes, **caractérisée en ce que** le quadrilatère est un parallélogramme, de préférence un rectangle, dans laquelle le rapport latéral des côtés longs (13) aux côtés courts (14) du quadrilatère s'élève au minimum à 1,1 et au maximum à 5.

6. Combinaison selon l'une des revendications précédentes, **caractérisée en ce que** le rapport des côtés courts (14) du quadrilatère à l'épaisseur (D) de la plaquette de coupe amovible s'élève au minimum à 2 et au maximum à 15, de préférence au minimum à 3 et au maximum à 10.

7. Combinaison selon l'une des revendications précédentes, **caractérisée en ce que** les sections, s'étendant le long des côtés longs, de la surface périphérique présentent deux surfaces d'appui (6 a-d) agencées à distance des arêtes de coupe les plus proches et à distance les unes des autres.

8. Combinaison selon l'une des revendications précédentes, **caractérisée en ce que** les sections, se trouvant à l'opposé les unes des autres, contiguës directement à une arête de coupe (4 a-d), des surfaces principales forment des surfaces libres accessoires (9 a, b, c, d), dont la distance les unes aux autres, à partir de l'arête de coupe et à distance de celle-ci est inférieure à la longueur mesurée perpendiculairement aux surfaces principales de l'arête de coupe.

9. Combinaison selon l'une des revendications précédentes, **caractérisée en ce que** les surfaces principales présentent un alésage de fixation (7) continu central.

10. Combinaison selon l'une des revendications précédentes, **caractérisée en ce que** la plaquette de coupe amovible (10) se compose d'une partie principale (1) centrale avec une première épaisseur de plaquette et l'alésage de fixation (7) central ainsi que de quatre pointes de coupe (1 a, b, c, d) avec des arêtes de coupe (4 a, b, c, d), dans laquelle la partie principale (1) présente une épaisseur plus faible ou une épaisseur plus grande que les pointes de coupe.

11. Combinaison selon l'une des revendications 1 à 10, **caractérisée en ce que** le siège de plaquette présente une surface latérale (21) et un évidement contigu à la surface latérale avec des flancs (23, 24) s'étendant sensiblement perpendiculairement à la surface latérale et coudés les uns par rapport aux autres, dans laquelle une surface de butée (25) est prévue au niveau d'un des flancs (23), laquelle est espacée du coin défini par un point d'intersection imaginaire des flancs (23, 24) coudés, alors que la tige de positionnement (27) est prévue au niveau du second flanc également à distance du coin, dans laquelle la distance du centre de l'alésage de fixation (26) dans la surface latérale (21) du support de plaquette de coupe amovible à la surface de butée (25) et la tige de positionnement (27) est inférieure à la distance du centre de l'alésage de fixation à la surface d' appui (6 a, b, c, d) de la plaquette de coupe amovible et de l'encoche de positionnement (5a, b).
